# EUROPEAN PATENT APPLICATION

(11) **EP 4 716 185 A1**
(43) Date of publication of application: **25.03.2026**
(21) Application number: 24822208.5
(22) Date of filing: 19.01.2024
(51) Int. Cl.: H04L 61/4511

(54) **DOMAIN NAME MANAGEMENT METHOD AND RELATED DEVICE**

(30) Priority: 15.06.2023 CN 202310714537; 08.09.2023 CN 202311162888
(71) Applicant: Huawei Cloud Computing Technologies Co., Ltd., Guiyang, Guizhou, 550025 (CN)
(72) Inventor: CHEN, Wei, Guiyang, Guizhou 550025 (CN)
(74) Representative: Goddar, Heinz J.
(86) International application number: PCT/CN2024/073194
(87) International publication number: WO 2024/255247

(57) **Abstract**

This application provides a domain name management method, applied to a domain name management system. The domain name management system includes a domain name system and a scheduling system, and the method includes: The scheduling system receives an access request of a user, where the access request includes a service domain name. The scheduling system determines, based on the access request, a target device from a plurality of access network devices that serve the service domain name, and redirects the access request to a target device in a normal service state. The domain name system receives a domain name resolution request of the user, where the domain name resolution request of the user is generated based on redirection information, and the domain name resolution request of the user includes a self-resolved domain name of the target device. The domain name system determines a service address of the target device based on a manner of mapping between a self-resolved domain name and a service address and the self-resolved domain name of the target device. The domain name system returns the service address of the target device for the user to access the target device. In the method, a self-resolved domain name is introduced, and it is not required to maintain massive domain name resolution records, to reduce maintenance difficulty and costs.

## Description

This application claims priority to Chinese Patent Application No. 202310714537.3, filed with the China National Intellectual Property Administration on June 15, 2023 and entitled "DOMAIN NAME MANAGEMENT METHOD AND RELATED DEVICE", and to Chinese Patent Application No. 202311162888.4, filed with the China National Intellectual Property Administration on September 8, 2023 and entitled "DOMAIN NAME MANAGEMENT METHOD AND RELATED DEVICE", both of which are incorporated herein by reference in their entireties.

### TECHNICAL FIELD

This application relates to the field of computer technologies, and in particular, to a domain name management method and system, a computing device cluster, a computer-readable storage medium, and a computer program product.

### BACKGROUND

A content delivery network (Content Delivery Network, CDN) is a technology for delivering content of an origin server to nodes in different areas, to reduce latency for users in the different areas to obtain objects, and increase a response speed of accessing a website by the user and website availability. The CDN greatly reduces a system maintenance workload of websites. Website maintenance personnel only need to inject website content to a CDN system and perform full network distribution of the content via the CDN and through servers deployed at different physical locations. In this way, full network coverage can be implemented across operators and regions.

Bandwidth costs for CDN operation are high, and usually account for more than 80% of total costs. To reduce the costs, a CDN operator may offload high-cost bandwidth traffic by connecting a large quantity of access network devices close to the user, such as an optical network terminal (Optical network terminal, ONT) and a router.

In consideration of security, hypertext transfer protocol secure (Hypertext Transfer Protocol Secure, HTTPS) is used for more services for data transmission, and therefore HTTPS traffic is generated. To securely offload HTTPS traffic of the CDN to an access network device, the industry proposes an offloading scheme based on a dedicated domain name. When scheduling the HTTPS traffic, a scheduling system uses a dedicated domain name of the access network device to schedule an HTTPS request of the user to an HTTPS service address of the access network device.

However, when the service address of the access network device changes (for example, an operator generally triggers redialing to change the service address for dial-up access within approximately two days), a dedicated domain name resolution record of the access network device needs to be updated. A quantity of dedicated domain names of massive access network devices may reach hundreds of millions. It is difficult to maintain dedicated domain name resolution records, and the dedicated domain name resolution records are frequently updated. This places a significant strain on authoritative domain name servers, making it difficult to meet service requirements.

### SUMMARY

This application provides a domain name management method. In the method, a self-resolved domain name is introduced to replace a dedicated domain name. A self-resolved domain name of an access network device may be automatically obtained through conversion based on a service address (for example, an IP address) of the access network device. Similarly, the service address of the access network device may be automatically obtained through conversion based on the self-resolved domain name of the access network device. For the self-resolved domain name, it is not required to maintain massive domain name resolution records, and it is not required to update a domain name resolution record when the service address changes, so that maintenance difficulty and maintenance costs are greatly reduced, and a strain on a domain name system like an authoritative DNS is reduced, to meet a service requirement. This application further provides a domain name system, a scheduling system, a computing device cluster, a computer-readable storage medium, and a computer program product that correspond to the domain name management method.

According to a first aspect, this application provides a domain name management method. The method may be applied to a domain name management system. The domain name management system may be a software system, and the software system may be deployed in a computing device cluster. The computing device cluster executes program code of the software system, to perform the domain name management method in this application. The domain name management system may alternatively be a hardware system, for example, a computing device cluster having a domain name management function (for example, domain name resolution or domain name scheduling). When the computing device cluster is run, the domain name management method in this application is performed.

Specifically, the domain name management system includes a domain name system and a scheduling system. The scheduling system receives an access request of a user, where the access request includes a service domain name; and then determines, based on the access request, a target device from a plurality of access network devices that serve the service domain name, and redirects the access request to the target device. A service state of the target device is normal. The user may generate a domain name resolution request based on redirection information, where the domain name resolution request of the user includes a self-resolved domain name of the target device. Correspondingly, the domain name system receives the domain name resolution request of the user; determines a service address of the target device based on a manner of mapping between a self-resolved domain name and a service address and the self-resolved domain name of the target device; and then the domain name system returns the service address of the target device, where the service address of the target device is used to access the target device.

In the method, a self-resolved domain name is introduced to replace a dedicated domain name. A self-resolved domain name of an access network device may be automatically obtained through conversion based on a service address of the access network device. Similarly, the service address of the access network device may be automatically obtained through conversion based on the self-resolved domain name of the access network device. For the self-resolved domain name, it is not required to maintain massive domain name resolution records, and it is not required to update a domain name resolution record when the service address changes, so that maintenance difficulty and maintenance costs are greatly reduced, and a strain on the domain name system like an authoritative DNS is reduced, to meet a service requirement. In addition, after the self-resolved domain name is introduced, the scheduling system and the authoritative DNS may implement self-resolution based on a manner of mapping between a self-resolved domain name and a service address, so that a scheduling center and the authoritative DNS are independent of each other.

In some possible implementations, the self-resolved domain name includes a domain name prefix and a fixed domain name suffix, the domain name prefix is generated through mapping based on a service address of the access network device, and the domain name suffix is a wildcard domain name. Correspondingly, the domain name system may extract the domain name prefix from the self-resolved domain name of the target device; and then perform inverse mapping on the domain name prefix based on the manner of mapping between the self-resolved domain name and the service address, to obtain the service address of the target device.

In the method, mapping between the domain name and the service address is reversible, so that forward resolution for the domain name (where the domain name is resolved to obtain the service address) and reverse resolution for the domain name (where the service address is resolved to obtain the domain name) can be implemented; and it is not required to maintain massive domain name resolution records, and real-time self-resolution is implemented through the mapping, to resolve problems of difficulty in maintaining a domain name resolution record, high update costs, and a significant strain on the authoritative DNS.

In some possible implementations, the mapping manner includes at least one of number system conversion or character string conversion. The number system conversion includes but is not limited to decimal conversion and hexadecimal conversion. The mapping manner is reversible and lays a foundation for domain name self-resolution. Both the domain name system and the scheduling system may implement domain name self-resolution based on the mapping manner, so that the scheduling center and the authoritative DNS are independent of each other.

In some possible implementations, before receiving the access request of the user, the scheduling system may receive a registration request of the access network device, where the registration request includes the service address of the access network device. Correspondingly, the scheduling system generates a self-resolved domain name of the access network device based on the manner of mapping between the self-resolved domain name and the service address and the service address of the access network device.

This helps schedule the access request to the access network device to implement traffic offloading.

In some possible implementations, the domain name system may further receive a domain name resolution request of the scheduling system, where the domain name resolution request of the scheduling system includes the self-resolved domain name of the access network device. The domain name system returns the service address of the access network device to the scheduling system. The scheduling system detects a service state of the access network device based on the service address of the access network device.

In the method, the scheduling system senses the service state of the access network device, to provide a reference for subsequently scheduling the access request. This ensures that the access request is scheduled to an access network device in a normal service state, and ensures quality of service on a basis of implementing traffic offloading.

In some possible implementations, the service state includes a domain name resolution service DNS state. The scheduling system may compare the service address that is of the access network device and that is returned by the domain name system with a current service address of the access network device. When the service address that is of the access network device and that is returned by the domain name system is consistent with the current service address of the access network device, the scheduling system determines that the DNS state of the access network device is normal; or when the service address that is of the access network device and that is returned by the domain name system is inconsistent with the current service address of the access network device, the scheduling system determines that the DNS state of the access network device is abnormal.

In the method, the scheduling system may determine a DNS service state by comparing a resolution result of the domain name system with the current service address of the access network device, to provide a basis for a subsequent scheduling decision.

In some possible implementations, the service state includes an HTTPS service state. The scheduling system initiates an HTTPS service dialing test request to the access network device. When a dialing test response succeeds, the scheduling system determines that an HTTPS service of the access network device is normal; or when a dialing test response fails, the scheduling system determines that an HTTPS service of the access network device is abnormal.

In the method, the scheduling system analyzes the HTTPS service state based on the dialing test response corresponding to the HTTPS service dialing test request, to provide a basis for a subsequent scheduling decision.

In some possible implementations, the scheduling system may further receive a heartbeat packet of the access network device. The scheduling system checks, based on the heartbeat packet, whether the service address of the access network device changes, and if the service address of the access network device changes, updates the self-resolved domain name of the access network device based on the manner of mapping between the self-resolved domain name and the service address.

In this way, when the service address of the access network device changes, the self-resolved domain name of the access network device can be updated in real time, to avoid a redirection exception caused by untimely update of the self-resolved domain name, and ensure quality of service.

According to a second aspect, this application provides a domain name management system. The domain name management system includes:
a scheduling system, configured to: receive an access request of a user, where the access request includes a service domain name; and determine, based on the access request, a target device from a plurality of access network devices that serve the service domain name, and redirect the access request to the target device, where a service state of the target device is normal; and
a domain name system, configured to: receive a domain name resolution request of the user, where the domain name resolution request of the user is generated based on redirection information, and the domain name resolution request of the user includes a self-resolved domain name of the target device, where
the domain name system is further configured to: determine a service address of the target device based on a manner of mapping between a self-resolved domain name and a service address and the self-resolved domain name of the target device; and return the service address of the target device, where the service address of the target device is used to access the target device.

In some possible implementations, the self-resolved domain name includes a domain name prefix and a fixed domain name suffix, the domain name prefix is generated through mapping based on a service address of the access network device, and the domain name suffix is a wildcard domain name.

The domain name system is specifically configured to:
extract the domain name prefix from the self-resolved domain name of the target device;
   and
perform inverse mapping on the domain name prefix based on the manner of mapping between the self-resolved domain name and the service address, to obtain the service address of the target device.

In some possible implementations, the mapping manner includes at least one of number system conversion or character string conversion.

In some possible implementations, the scheduling system is further configured to:
receive a registration request of the access network device, where the registration request includes the service address of the access network device; and
generate a self-resolved domain name of the access network device based on the manner of mapping between the self-resolved domain name and the service address and the service address of the access network device.

In some possible implementations, the domain name system is further configured to:
receive a domain name resolution request of the scheduling system, where the domain name resolution request of the scheduling system includes the self-resolved domain name of the access network device; and
return the service address of the access network device to the scheduling system.

The scheduling system is further configured to:
detect a service state of the access network device based on the service address of the access network device.

In some possible implementations, the service state includes a domain name resolution service DNS state, and the scheduling system is specifically configured to:
compare the service address that is of the access network device and that is returned by the domain name system with a current service address of the access network device; and
when the service address that is of the access network device and that is returned by the domain name system is consistent with the current service address of the access network device, determine that the DNS state of the access network device is normal; or when the service address that is of the access network device and that is returned by the domain name system is inconsistent with the current service address of the access network device, determine that the DNS state of the access network device is abnormal.

In some possible implementations, the service state includes a hypertext transfer protocol secure HTTPS service state, and the scheduling system is specifically configured to:
initiate an HTTPS service dialing test request to the access network device; and
when a dialing test response succeeds, determine that an HTTPS service of the access network device is normal; or when a dialing test response fails, determine that an HTTPS service of the access network device is abnormal.

In some possible implementations, the scheduling system is further configured to:
receive a heartbeat packet of the access network device; and
check, based on the heartbeat packet, whether the service address of the access network device changes, and if the service address of the access network device changes, update the self-resolved domain name of the access network device based on the manner of mapping between the self-resolved domain name and the service address.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the domain name management method according to any one of the first aspect or the implementations of the first aspect.

According to a fourth aspect, this application provides a computer-readable storage medium. The computer-readable storage medium stores instructions. The instructions instruct a computing device or a computing device cluster to perform the domain name management method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the domain name management method according to any one of the first aspect or the implementations of the first aspect.

In this application, based on the implementations provided in the foregoing aspects, the implementations may be further combined, to provide more implementations.

### BRIEF DESCRIPTION OF DRAWINGS

To describe technical methods in embodiments of this application more clearly, the following briefly describes the accompanying drawings for describing embodiments.
FIG. 1 is a diagram of performing domain name scheduling and resolution based on a dedicated domain name of an access network device according to an embodiment of this application;
FIG. 2 is a diagram of an architecture of a domain name management system according to an embodiment of this application;
FIG. 3 is a diagram of a device registration procedure according to an embodiment of this application;
FIG. 4 is a diagram of a procedure of detecting a service state of a device according to an embodiment of this application;
FIG. 5 is a schematic flowchart of a domain name management method according to an embodiment of this application;
FIG. 6 is a diagram of a structure of a computing device according to an embodiment of this application;
FIG. 7 is a diagram of a structure of a computing device cluster according to an embodiment of this application;
FIG. 8 is a diagram of a structure of another computing device cluster according to an embodiment of this application; and
FIG. 9 is a diagram of a structure of still another computer cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A domain name is also referred to as a domain, and is a name that is of a computer or a computer group on an internet and that includes a string of characters separated by dots. The domain name identifies an electronic orientation of the computer during data transmission. The domain name may be considered as a designation of a service address, for example, an internet protocol (internet protocol, IP) address, to facilitate memorization of the service address. For example, "abc.org" or "xyz.com" is a domain name. A user may directly access "abc.org" or "xyz.com" to replace an IP address. Then a domain name system (Domain Name System, DNS) may convert a domain name in an access request into an IP address that can be easily identified by a machine. In this case, the user only needs to memorize a string of characters with a special meaning, that is, "abc.org" or "xyz.com", and does not need to memorize a number without a meaning.

The domain name system (DNS) is a service of the internet, and is usually used as a distributed database for mapping between a domain name and an IP address, so that the user can more easily access the internet. Usually, the DNS may provide a resolution service, including forward resolution or reverse resolution. The forward resolution may be a process of searching for an IP address corresponding to a domain name, and the reverse resolution may be a process of searching for a domain name corresponding to an IP address. The DNS may include an authoritative DNS (also referred to as an authoritative DNS server) and a recursive DNS (also referred to as a local DNS or a local DNS server).

The authoritative DNS is a set of system located at a DNS service end. The system stores authoritative information of a corresponding domain name and keeps an authoritative record of a specific domain. The authoritative DNS is unique in a specific area and is responsible for a correspondence between a domain name and an IP address in the area. The authoritative DNS is a reference point for the IP address and other DNS data, and may provide an answer about a location of a website to the local DNS.

The local DNS is responsible for receiving a domain name query request (a domain name resolution request) of the user and returning a result to the user. The local DNS may cache the result, to avoid repeated upward query (for example, repeatedly querying the authoritative DNS). Usually, the local DNS may obtain the result through recursive query. The recursive query refers to querying another server to obtain the result when the result is not cached locally, and returning the result to the user.

To provide better access experience, some websites use a CDN for acceleration. Specifically, website maintenance personnel only need to inject website content to a CDN system and perform full network distribution of the content via the CDN and through servers deployed at different physical locations. In this way, full network coverage can be implemented across operators and regions. Bandwidth costs of the CDN are high, and a CDN operator may usually access a large quantity of access network devices (for example, ONTs and routers) close to the user. Bandwidth costs of an access network device are low, and the access network device may be used to offload high-cost bandwidth traffic of the CDN. As customers attach more importance to network security, a proportion of HTTPS traffic on the CDN increases gradually. How to equally securely offload the HTTPS traffic on the CDN to access network devices is also a key challenge currently faced.

To ensure HTTPS transmission coverage of a user service link in an entire process, in a related technology, a wildcard domain name and a related certificate are applied for, a dedicated domain name is allocated to all access network devices based on the wildcard domain name, and the dedicated domain name resolution is registered with an authoritative DNS server to point to a service address (which may be usually an IP address) of the access network device. When the service address of the access network device changes (for example, an operator system generally triggers redialing to change a service IP address for dial-up access within approximately two days), a dedicated domain name resolution record of the access network device is updated.

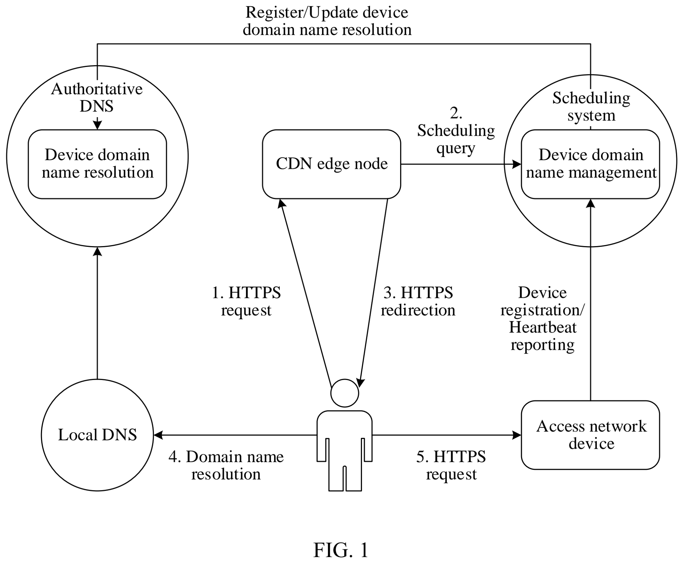

FIG. 1 is a diagram of performing domain name scheduling and resolution based on a dedicated domain name of an access network device. When scheduling HTTPS traffic (for example, an HTTPS request), a scheduling system schedules an HTTPS request of a user to an HTTPS service address of the access network device by using the dedicated domain name of the access network device. Specifically, the user first queries, via a local DNS proxy, an authoritative DNS for an IP address corresponding to the dedicated domain name of the access network device, and then securely obtains, based on the IP address, content from the access network device through an HTTPS channel.

However, a quantity of dedicated domain names of massive access network devices may reach hundreds of millions. This increases maintenance difficulty and maintenance costs of dedicated domain name resolution records. In addition, because an IP address changes, the dedicated domain name resolution records need to be frequently updated. This further increases the maintenance difficulty and the maintenance costs of the dedicated domain name resolution records, and places a significant strain on an authoritative DNS, making it difficult to meet service requirements.

In view of this, this application provides a domain name management method. The method is performed by a domain name management system. The domain name management system may be a software system, and the software system may be deployed in a computing device cluster. The computing device cluster executes program code of the software system, to perform the domain name management method in this application. The domain name management system may alternatively be a hardware system, for example, a computing device cluster having a domain name management function. When the computing device cluster is run, the domain name management method in this application is performed.

Specifically, the domain name management system includes a domain name system and a scheduling system. The scheduling system receives an access request of a user, where the access request includes a service domain name. Then, the scheduling system determines, based on the access request, a target device from a plurality of access network devices that serve the service domain name, and redirects the access request to the target device. A service state of the target device is normal. The domain name system receives a domain name resolution request of the user, where the domain name resolution request of the user is generated based on redirection information, and the domain name resolution request of the user includes a self-resolved domain name of the target device. Then, the domain name system determines a service address of the target device based on a manner of mapping between a self-resolved domain name and a service address (for example, an IP address) and the self-resolved domain name of the target device. Next, the domain name system returns the service address of the target device, where the service address of the target device is used to access the target device.

In the method, a self-resolved domain name is introduced to replace a dedicated domain name. A self-resolved domain name of an access network device may be automatically obtained through conversion based on a service address (for example, an IP address) of the access network device. Similarly, the service address of the access network device may be automatically obtained through conversion based on the self-resolved domain name of the access network device. For the self-resolved domain name, it is not required to maintain massive domain name resolution records, and it is not required to update a domain name resolution record when the service address changes, so that maintenance difficulty and maintenance costs are greatly reduced, and a strain on the domain name system like an authoritative DNS is reduced, to meet a service requirement. In addition, after the self-resolved domain name is introduced, the scheduling system and the authoritative DNS may implement self-resolution based on a manner of mapping between a self-resolved domain name and a service address (also referred to as a self-resolved domain name rule), so that a scheduling center and the authoritative DNS are independent of each other.

To make the technical solutions of this application clearer and easier to understand, the following describes a system architecture in this application with reference to the accompanying drawings.

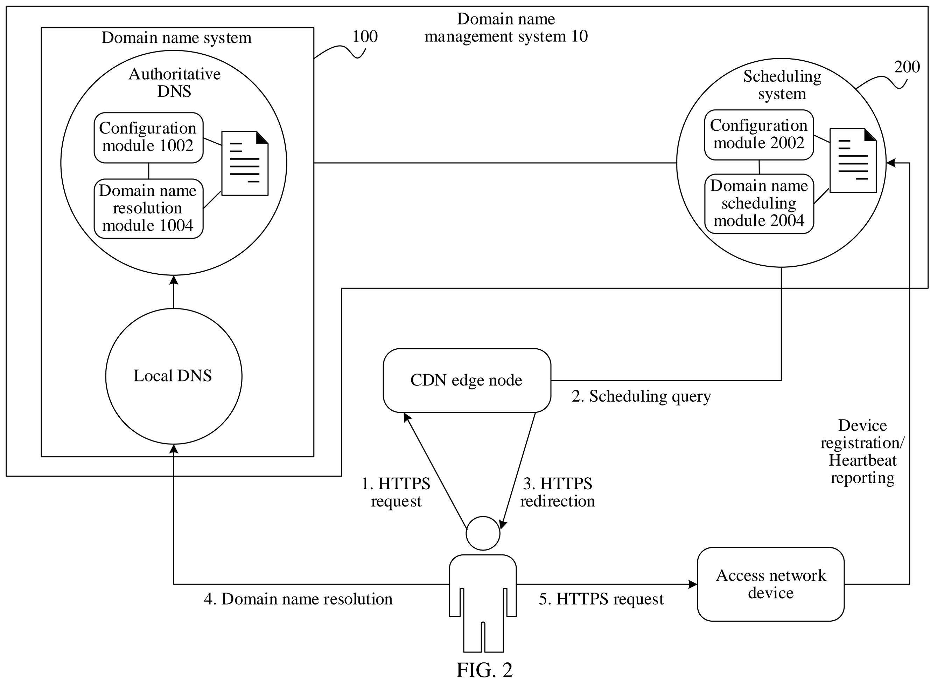

Refer to a diagram of an architecture of a domain name management system shown in FIG. 2. A domain name management system 10 includes a domain name system 100 and a scheduling system 200. The domain name system 100 includes an authoritative DNS and a local DNS.

The scheduling system 200 is configured to receive an access request of a user (for example, a browser or a client), where the access request includes a service domain name. The service domain name may include a uniform resource locator (uniform resource locator, URL). The access request is used to access content (for example, a network resource) corresponding to the URL. In a specific implementation, the access request may be a request for accessing the content corresponding to the URL based on HTTPS, that is, an HTTPS request. It should be noted that the HTTPS request is merely an example of the access request. In another possible implementation of this application, the access request may be a request that is of another type and that is used to access a network resource, for example, an HTTP request.

Further, the user may send the access request to a CDN edge node. The CDN edge node may send the access request to the scheduling system 200 for scheduling query, to query for an access network device that can be scheduled to implement traffic offloading. The traffic offloading may mean that the access request (for example, the HTTPS request) is scheduled to the access network device, and the access network device makes a response.

The scheduling system 200 is further configured to: determine, based on the access request, a target device from a plurality of access network devices that serve the service domain name, and redirect the access request to the target device. A service state of the target device is normal. That the scheduling system 200 redirects the access request to the target device may be that the scheduling system 200 returns redirection information to the user. Redirection means that when the user (for example, the browser or the client) requests the network resource corresponding to the URL, a service end (for example, the scheduling system 200) returns a redirection instruction indicating that the URL changes, and the user may use a new URL to resend a new request. The redirection information may include the redirection instruction, and the redirection information may indicate a self-resolved domain name of the target device.

The domain name system 100 is configured to receive a domain name resolution request of the user. The domain name resolution request of the user may be generated based on the redirection information. For example, the domain name resolution request of the user includes the self-resolved domain name of the target device. Specifically, the user may first send the domain name resolution request to the local DNS in the domain name system 100, and the local DNS queries a cache. When the cache does not include a service address corresponding to the self-resolved domain name, the local DNS sends the domain name resolution request of the user to the authoritative DNS in the domain name system 100. In this way, the domain name system 100 may receive the domain name resolution request of the user.

The domain name system 100 is further configured to determine a service address of the target device based on a manner of mapping between a self-resolved domain name and a service address and the self-resolved domain name of the target device. The manner of mapping between the self-resolved domain name and the service address may be represented by a self-resolved domain name conversion rule. In some examples, the manner of mapping between the self-resolved domain name and the service address (the self-resolved domain name conversion rule) includes at least one of number system conversion or character string conversion. The number system conversion includes but is not limited to decimal integer conversion or hexadecimal integer conversion.

The domain name system 100 is further configured to return the service address of the target device, where the service address of the target device is used to access the target device. The domain name system 100 may return the service address of the target device to the user, so that the user accesses a network resource of the target device based on the service address (for example, an IP address) of the target device. In a specific implementation, the authoritative DNS in the domain name system 100 may send the service address of the target device to the local DNS, and the local DNS returns the service address of the target device to the user. The service address is used to access the target device. As shown in FIG. 2, the user may initiate an access request (for example, the HTTPS request) to the target device again based on the service address that is of the target device and that is returned by the domain name system 100, to obtain a corresponding resource.

In some possible implementations, the scheduling system 200 is further configured to register or manage an access network device, to schedule the access request to the access network device. For example, the scheduling system 200 may receive a registration request of the access network device, may obtain a service address (for example, an IP address) of the access network device based on the registration request, and may generate a self-resolved domain name of the access network device based on the manner of mapping between the self-resolved domain name and the service address (the self-resolved domain name conversion rule) and the service address. Further, the scheduling system 200 may further receive a heartbeat packet of the access network device, to detect a health state of the access network device or detect whether the service address of the access network device changes.

The foregoing describes an overall architecture from perspectives of the domain name system 100 and the scheduling system 200. The following describes the domain name management system from a perspective of function modularization.

As shown in FIG. 2, the domain name management system 10 includes a configuration module 1002 and a domain name resolution module 1004. The configuration module 1002 and the domain name resolution module 1004 may be modules in the domain name system 100, or modules deployed in the domain name system 100 (for example, modules deployed in the authoritative DNS). The configuration module 1002 is configured to configure a manner of mapping between a self-resolved domain name and a service address, for example, configure a self-resolved domain name conversion rule. The domain name resolution module 1004 is configured to determine a service address of an access network device based on the manner of mapping between the self-resolved domain name and the service address and a self-resolved domain name of the access network device.

The domain name management system 10 may further include a configuration module 2002 and a domain name scheduling module 2004. Similarly, the configuration module 2002 and the domain name scheduling module 2004 may be modules in the scheduling system 200, or modules deployed in the scheduling system 200. The configuration module 2002 is configured to configure a manner of mapping between a self-resolved domain name and a service address, for example, configure a self-resolved domain name conversion rule. The domain name scheduling module 2004 is configured to return the self-resolved domain name of the access network device, to schedule an access request to the access network device.

In the technical solutions of this application, the domain name system 100 does not need to maintain massive dedicated domain name resolution records, and may implement real-time self-resolution based on the manner of mapping between the self-resolved domain name and the service address. Even if the service address changes, the scheduling system 200 may update the self-resolved domain name in real time based on the mapping manner. The domain name system 100 may perform real-time resolution based on an updated self-resolved domain name, to resolve problems of difficulty in maintaining a domain name resolution record, high update costs, and a significant strain on the authoritative DNS. In addition, the self-resolved domain name introduced into this application is generated based on the service address, and is unique, to avoid redundancy in domain names.

In addition, when the IP address of the access network device changes, in a solution based on a dedicated domain name, the access network device is required to remain silent for a period of time. Even if a resolution record of the authoritative DNS is updated in real time, the access network device cannot provide a service before a local DNS cache expires. In the solutions of this application, the access network device is not required to be silent, and may continuously provide a service.

Based on the domain name management system 10 in the foregoing embodiments, the following describes the domain name management method in this application with reference to an embodiment. Domain name management includes domain name scheduling and domain name resolution. An access network device may first perform registration, so that a domain name system schedules an access request to the access network device.

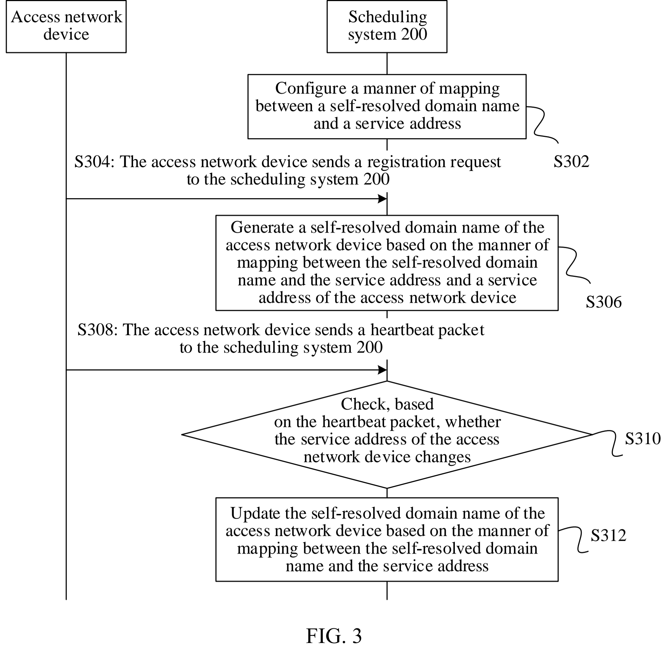

Refer to a diagram of a device registration procedure shown in FIG. 3. The following steps are included.

S302: A scheduling system 200 configures a manner of mapping between a self-resolved domain name and a service address.

The self-resolved domain name is a domain name that can implement self-resolution. In some possible implementations, the self-resolved domain name includes a domain name prefix and a fixed domain name suffix. The domain name prefix is generated through mapping based on a service address of an access network device, and the domain name suffix is a wildcard domain name, for example, a self-resolved wildcard domain name. Scheduling, resolution, and a service (including a certificate) of a device are all based on the wildcard domain name. This application provides examples of the self-resolved wildcard domain name, for example, "*.self-resolve.com". "*" may be a wildcard character.

The manner of mapping between the self-resolved domain name and the service address may be a reversible mapping manner. In other words, a service address corresponding to a self-resolved domain name may be determined based on the mapping manner, and a self-resolved domain name corresponding to a service address may also be determined based on the mapping manner. In some possible implementations, the manner of mapping between the self-resolved domain name and the service address includes but is not limited to number system conversion or character string conversion. The number system conversion may be decimal integer conversion or hexadecimal integer conversion.

For ease of understanding, the following provides descriptions with reference to an example. Refer to the following table.

**Table 1**

| Self-resolved wildcard domain name | Manner of mapping between a self-resolved domain name and a service address | Service address | Self-resolved domain name |
|---|---|---|---|
| | Decimal integer conversion | 120.233.179.117 | 2028581749. self-resolve.com |
| * .self-resolve.com | Hexadecimal integer conversion | 120.233.179.118 | 78e9b376. self-resolve.com |
| | Character string conversion | 120.233.179.119 | 120-233-179-119. self-resolve.com |

The scheduling system 200 may receive a manner that is of mapping between a self-resolved domain name and a service address and that is configured by an administrator or operation and maintenance personnel, for example, the decimal integer conversion, the hexadecimal integer conversion, or the character string conversion shown in Table 1. The character string conversion in Table 1 is to replace a character "." with "-". In another possible implementation of this embodiment of this application, "." may be replaced with another character, or "." may be directly removed, to implement character string conversion.

S304: The access network device sends a registration request to the scheduling system 200.

The registration request is used to register the access network device with the scheduling system, to help offload traffic of a CDN. The registration request may carry the service address of the access network device. Specifically, a message header or a packet header of the registration request carries a source address, and the source address may include the service address of the access network device. The service address of the access network device includes but is not limited to an IP address.

S306: The scheduling system 200 generates a self-resolved domain name of the access network device based on the manner of mapping between the self-resolved domain name and the service address and the service address of the access network device.

The scheduling system 200 may perform mapping on the service address of the access network device based on the manner of mapping between the self-resolved domain name and the service address, to generate the self-resolved domain name of the access network device. In some possible implementations, a domain name suffix of a self-resolved domain name is fixed. The scheduling system 200 may perform mapping on the service address of the access network device based on the manner of mapping between the self-resolved domain name and the service address, obtain a domain name prefix, and then splice the domain name prefix and the domain name suffix, to obtain the self-resolved domain name.

For example, the manner that is of mapping between the self-resolved domain name and the service address and that is configured by the scheduling system 200 is the decimal integer conversion. The scheduling system 200 parses the registration request to obtain the service address (the IP address) of the access network device as 120.233.179.117, and performs decimal integer conversion on the service address to obtain a domain name prefix, which is specifically 2028581749. The scheduling system may assemble the domain name prefix and the domain name suffix, to obtain the self-resolved domain name as "2028581749. self-resolve.com".

S308: The access network device sends a heartbeat packet to the scheduling system 200.

Considering that the service address of the access network device may change, for example, in a dial-up access scenario, an operator may periodically or aperiodically update the service address of the access network device. Based on this, the access network device may send the heartbeat packet to the scheduling system 200. The access network device may periodically report a heartbeat packet to the scheduling system 200. For example, the access network device may maintain a timer, and periodically report the heartbeat packet based on the timer.

S310: The scheduling system 200 checks, based on the heartbeat packet, whether the service address of the access network device changes, and if the service address of the access network device changes, performs S312.

Specifically, the scheduling system 200 may parse the heartbeat packet, for example, parse a packet header of the heartbeat packet, to obtain a current service address of the access network device, and then compare the current service address with a service address (which is from the registration request or a latest heartbeat packet) that is of the access network device and that is most recently obtained, to determine whether the service address changes. If the current service address is inconsistent with the service address that is of the access network device and that is most recently obtained, it indicates that the service address of the access network device changes.

S312: The scheduling system 200 updates the self-resolved domain name of the access network device based on the manner of mapping between the self-resolved domain name and the service address.

The scheduling system may perform mapping on the current service address of the access network device based on the manner of mapping between the self-resolved domain name and the service address, to update the self-resolved domain name of the access network device. For a specific implementation of updating the self-resolved domain name by the scheduling system 200, refer to descriptions of related content of generating the self-resolved domain name. Details are not described herein again.

It should be noted that S302 is a preprocessing step. After configuration is completed, domain name resolution services may be provided for different users based on the configured mapping manner, or domain name resolution services may be provided for a plurality of domain name resolution requests of a same user. In addition, S308 to S312 are optional steps in this embodiment of this application, and S308 to S312 may not be performed when the method in this application is performed.

Based on the foregoing method steps, the access network device may be registered with the scheduling system 200, and the scheduling system 200 may schedule, to the access network device, an access request for accessing a CDN edge node, to reduce bandwidth costs of the CDN.

To ensure a scheduling effect, the scheduling system 200 may sense a service state (also referred to as a service health state) of the access network device in real time, including at least one of a domain name resolution service DNS state or an HTTPS service state, so that a scheduling decision is provided during service scheduling. The scheduling decision indicates an access network device to which an access request (for example, an HTTPS request) is scheduled. The scheduling system 200 may periodically perform health dialing test on the access network device, to sense the service health state of the access network device.

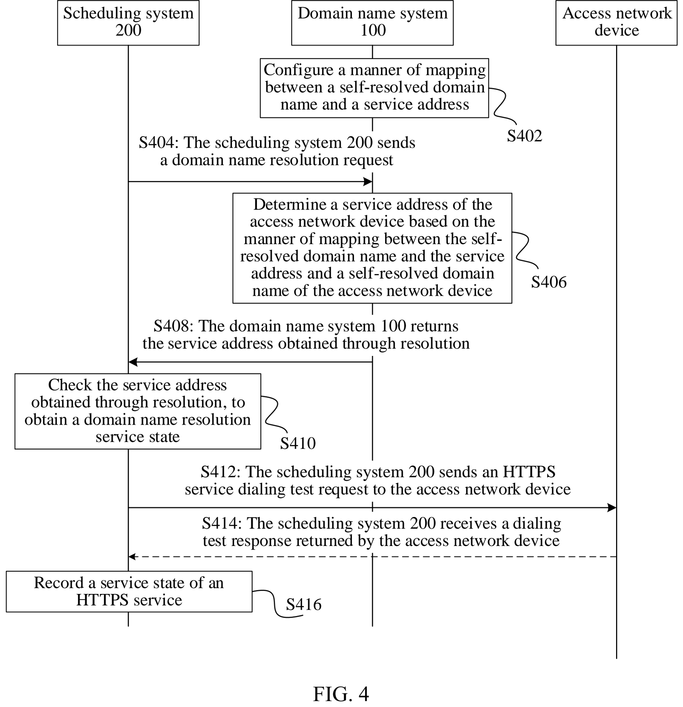

Refer to a diagram of a procedure of detecting a service state of a device shown in FIG. 4. The following steps are included.

S402: The domain name system 100 configures a manner of mapping between a self-resolved domain name and a service address.

Specifically, an authoritative DNS in the domain name system may configure the manner of mapping between the self-resolved domain name and the service address, that is, a self-resolved domain name conversion rule. In a specific implementation, the authoritative DNS may receive the self-resolved domain name conversion rule that is configured by an administrator or operation and maintenance personnel, to configure the manner of mapping between the self-resolved domain name and the service address.

It should be noted that the configuration of the manner of mapping between the self-resolved domain name and the service address in the authoritative DNS is prior to the configuration of the manner of mapping between the self-resolved domain name and the service address in the scheduling system 200. Similar to S302, S402 is a preprocessing step. After configuration is completed, domain name resolution may be performed on different access network devices based on the configured manner of mapping between the self-resolved domain name and the service address, to detect service states of different access network devices. Alternatively, domain name resolution is performed on a same access network device in different time periods based on the configured manner of mapping between the self-resolved domain name and the service address, to detect service states of the access network devices in different time periods.

S404: The scheduling system 200 sends a domain name resolution request to the domain name system 100.

Specifically, the scheduling system 200 may send the domain name resolution request to the authoritative DNS in the domain name system 100. The domain name resolution request includes a self-resolved domain name that is generated by the scheduling system 200 based on a service address of an access network device.

S406: The domain name system 100 determines, based on the manner of mapping between the self-resolved domain name and the service address, a service address corresponding to the self-resolved domain name.

Specifically, the authoritative DNS in the domain name system 100 may perform mapping on the self-resolved domain name based on the manner of mapping between the self-resolved domain name and the service address, to obtain the service address corresponding to the self-resolved domain name. The self-resolved domain name includes a domain name prefix and a fixed domain name suffix. The domain name system 100 (for example, the authoritative DNS) may extract a domain name prefix from a self-resolved domain name of the access network device, and perform inverse mapping on the domain name prefix based on the manner of mapping between the self-resolved domain name and the service address, to obtain the service address of the access network device.

For ease of understanding, the following provides descriptions with reference to an example. In this example, a self-resolved domain name may be "2028581749. self-resolve.com", and the manner that is of mapping between the self-resolved domain name and the service address and that is configured by the domain name system 100 may be decimal integer conversion. The authoritative DNS in the domain name system 100 may extract a domain name prefix "2028581749" from the self-resolved domain name, and then perform inverse mapping on the domain name prefix "2028581749" based on the decimal integer conversion, to obtain a service address "120.233.179.117".

During actual application, to facilitate inverse mapping, the domain name system 100 may further convert a decimal system into a binary system, and then obtain a binary representation manner for each segment of address through shift operation. The domain name system 100 may further convert the binary representation manner of each segment of address into a decimal representation manner, to obtain a service address represented in a dotted decimal notation manner.

S408: The domain name system 100 returns, to the scheduling system 200, the service address obtained through resolution.

S410: The scheduling system 200 checks the service address obtained through resolution, to obtain a domain name resolution service state.

Specifically, the scheduling system 200 may compare the service address (namely, the service address that is of the access network device and that is returned by the domain name system) obtained through resolution with a current service address (for example, a service address that is obtained by parsing a heartbeat packet reported by the access network device) of the access network device. When the service address that is of the access network device and that is returned by the domain name system is consistent with the current service address of the access network device, it indicates that a domain name resolution service state of the access network device is normal, that is, a domain name resolution service is in a healthy state. When the service address that is of the access network device and that is returned by the domain name system is inconsistent with the current service address of the access network device, it indicates that a domain name resolution service state is abnormal, that is, a domain name resolution service is in an unhealthy state.

S412: The scheduling system 200 sends an HTTPS service dialing test request to the access network device.

The HTTPS service dialing test request may be an HTTPS-based heartbeat packet, and the packet is used to detect an HTTPS service state. The scheduling system 200 may periodically send the HTTPS-based heartbeat packet to the access network device, to sense a service state of an HTTPS service in real time.

S414: The scheduling system 200 receives a dialing test response returned by the access network device.

The dialing test response may be an HTTPS-based heartbeat response. The dialing test response may include different response types, and the different response types may represent different service states of the HTTPS service. For example, if the dialing test response succeeds, it indicates that the service state of the HTTPS service is normal; or if the dialing test response fails, it indicates that the service state of the HTTPS service is abnormal.

S416: The scheduling system 200 records the service state of the HTTPS service.

Specifically, the scheduling system 200 may determine the service state of the HTTPS service based on a status of receiving the heartbeat response. When the scheduling system 200 receives, within specified time, the HTTPS-based heartbeat response returned by the access network device, it indicates that the service state of the HTTPS service is normal, that is, the HTTPS service is in a healthy state. When the scheduling system 200 does not receive, within specified time, the HTTPS-based heartbeat response returned by the access network device (for example, S414 is not performed), it indicates that the service state of the HTTPS service is abnormal, that is, the HTTPS service is in an unhealthy state.

It should be noted that S404 to S410 are performed to detect the service state of the domain name resolution service, and S412 to S416 are performed to detect the service state of the HTTPS service. The foregoing processes may be decoupled from each other. Based on this, S404 to S410 and S412 to S416 may be performed in parallel, or S404 to S410 and S412 to S416 are performed in a specified sequence. In some possible implementations, if it is detected that the service state of the domain name resolution service is abnormal, service detection of the service state of the HTTPS service may be terminated. Similarly, if it is detected that the service state of the HTTPS service is abnormal, detection of the service state of the domain name resolution service may also be terminated.

Based on the foregoing embodiments, this application provides a domain name management method. The method supports domain name scheduling and domain name resolution. The following describes the domain name management method in this application with reference to an embodiment.

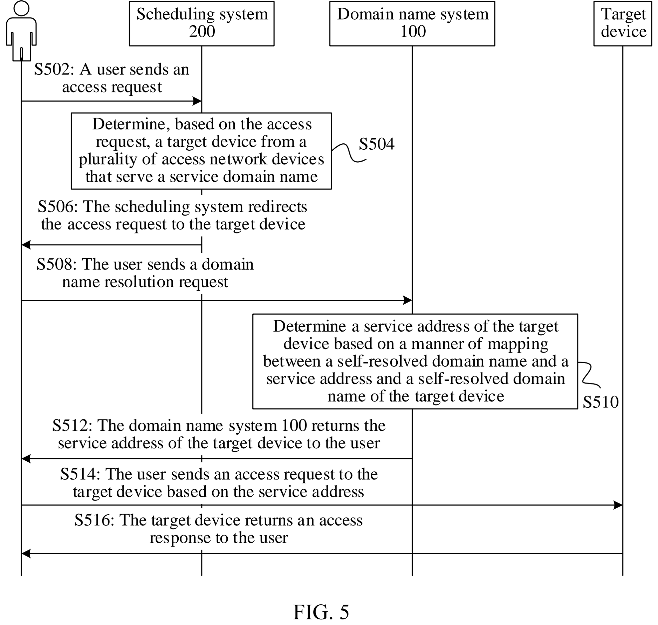

Refer to a schematic flowchart of a domain name management method shown in FIG. 5. The method includes the following steps.

S502: A scheduling system 200 receives an access request of a user.

The access request is used to request to access a resource. The resource includes, but is not limited to, a text, an image, a table, audio, or a video. The access request may be generated based on an access protocol or a data transmission protocol. In some possible implementations, for the access request, an HTTPS may be used to ensure security. In other words, the access request may be an HTTPS request. The access request may include a service domain name. Specifically, the access request includes a URL, and the URL indicates a path for content (a network resource) that is requested for access.

In some possible implementations, the user may send the access request to a CDN edge node, to request to access a resource of the CDN edge node. The CDN edge node may send the access request to the scheduling system 200, to schedule the access request to an access network device, so as to offload traffic of the CDN edge node.

S504: The scheduling system 200 determines, based on the access request, a target device from a plurality of access network devices that serve the service domain name.

In a specific implementation, the scheduling system 200 may determine, based on the access request, the plurality of access network devices that serve the service domain name, and detect a service state of at least one of the plurality of access network devices, including an HTTP service state and an HTTPS service state. The scheduling system 200 may filter an access network device in an abnormal service state, and determine the target device from access network devices in a normal service state. A service state of the target device is normal.

In some possible implementations, the scheduling system 200 may randomly select, as the target device, an access network device from the access network devices in the normal service state. In some other possible implementations, the scheduling system 200 may alternatively determine, as the target device, a 1^{st} detected access network device that is in a normal service state.

S506: The scheduling system 200 redirects the access request to the target device.

Specifically, when the access request is the HTTPS request, the scheduling system 200 may redirect the access request to the foregoing target device in an HTTPS 302 manner.

In some possible implementations, the scheduling system 200 may return, to the CDN edge node, an address that is redirected to, for example, a URL that is redirected to. The CDN edge node returns a redirection instruction to the user, and the redirection instruction includes the URL that is redirected to.

S508: The user sends a domain name resolution request to a domain name system 100.

Specifically, the user may obtain a self-resolved domain name of the target device based on the URL that is redirected to. The user may send the domain name resolution request to the domain name system 100 based on the self-resolved domain name. The domain name resolution request includes the self-resolved domain name of the target device, and is used to request a service address corresponding to the self-resolved domain name.

S510: The domain name system 100 determines a service address of the target device based on a configured manner of mapping between a self-resolved domain name and a service address and the self-resolved domain name of the target device.

In a specific implementation, the domain name resolution request may first reach a local DNS in the domain name system 100. When the local DNS does not cache the service address corresponding to the self-resolved domain name, the local DNS may send the domain name resolution request to an authoritative DNS. The authoritative DNS server may perform mapping on the self-resolved domain name in the domain name resolution request based on the configured manner of mapping between the self-resolved domain name and the service address, to determine the service address corresponding to the self-resolved domain name. The service address corresponding to the self-resolved domain name is the service address of the target device.

For a specific implementation in which the domain name system 100 determines, based on the configured manner of mapping between the self-resolved domain name and the service address, the service address corresponding to the self-resolved domain name, refer to descriptions of related content in the foregoing embodiments. Details are not described herein again.

S512: The domain name system 100 returns the service address of the target device to the user.

Specifically, when the local DNS in the domain name system 100 caches the service address corresponding to the self-resolved domain name (the service address of the target device), the local DNS may return, to the user, the service address corresponding to the self-resolved domain name. When the local DNS in the domain name system 100 does not cache the service address corresponding to the self-resolved domain name, the local DNS may receive the service address that corresponds to the self-resolved domain name and that is returned by the authoritative DNS, and then return, to the user, the service address corresponding to the self-resolved domain name.

S514: The user sends an access request to the target device based on the service address.

S516: The target device returns an access response to the user.

Specifically, the user may set up an HTTPS connection to the service address returned by the authoritative DNS, to securely obtain content.

S502 to S506 are optional steps in this embodiment of this application, and the foregoing steps may not be performed when the domain name management method in this embodiment of this application is performed. For example, when the user learns of a self-resolved domain name of the access network device, the user may directly send a domain name resolution request to the domain name system 100 to perform domain name resolution. Similarly, S514 and S516 are optional steps in this embodiment of this application, and the foregoing steps may not be performed when the domain name management method in this embodiment of this application is performed.

It can be learned from the foregoing content descriptions that, in the domain name management method in this application, a self-resolved domain name is introduced to replace a dedicated domain name. A self-resolved domain name of the access network device may be automatically obtained through conversion based on a service address (for example, an IP address) of the access network device. Similarly, the service address of the access network device may be automatically obtained through conversion based on the self-resolved domain name of the access network device. For the self-resolved domain name, it is not required to maintain massive domain name resolution records, and it is not required to update a domain name resolution record when the service address changes, so that maintenance difficulty and maintenance costs are greatly reduced, and a strain on the domain name system like the authoritative DNS is reduced, to meet a service requirement. In addition, when the service address of the access network device changes, the access network device is not required to be silent, and can continuously and stably provide a service. In addition, the method can resolve a problem of redundancy in dedicated domain names, and features high scalability.

Based on the foregoing method embodiments, this application further provides a domain name management system 10. As shown in FIG. 2, the domain name management system 10 includes a domain name system 100 and a scheduling system 200.

The scheduling system 200 is configured to: receive an access request of a user, where the access request includes a service domain name; and determine, based on the access request, a target device from a plurality of access network devices that serve the service domain name, and redirect the access request to the target device, where a service state of the target device is normal.

The domain name system 100 is configured to receive a domain name resolution request of the user, where the domain name resolution request of the user is generated based on redirection information, and the domain name resolution request of the user includes a self-resolved domain name of the target device.

The domain name system 100 is further configured to: determine a service address of the target device based on a manner of mapping between a self-resolved domain name and a service address and the self-resolved domain name of the target device, and return the service address of the target device, where the service address of the target device is used to access the target device.

For example, the domain name system 100 and the scheduling system 200 may be implemented by using hardware, or may be implemented by using software.

When software is used for implementation, the domain name system 100 and the scheduling system 200 may be application programs that are run on a computing device. Such an application program may be provided as a virtualization service for a user to use. The virtualization service may include a virtual machine (virtual machine, VM) service, a bare metal server (bare metal server, BMS) service, and a container (container) service. The VM service may be a service in which a virtualization technology is used to virtualize a virtual machine (virtual machine, VM) resource pool on a plurality of physical hosts (for example, computing devices), to provide a VM, based on a need, for the user to use. The BMS service is a service in which a BMS resource pool is virtualized on a plurality of physical hosts, to provide, based on a need, a BMS for the user to use. The container service is a service in which a container resource pool is virtualized on a plurality of physical hosts, to provide, based on a need, a container for the user to use. A VM is a simulated virtual computer, that is, a computer from a perspective of logic. A BMS is a scalable high-performance computing service whose computing performance is the same as that of a conventional physical machine, and features secure physical isolation. A container is a kernel virtualization technology, and can provide light-weight virtualization to isolate user space, a process, and a resource. It should be understood that the VM service, the BMS service, and the container service in the virtualization service are merely specific examples. During actual application, the virtualization service may alternatively be another light-weight or heavy-weight virtualization service. This is not specifically limited herein.

When hardware is used for implementation, the domain name system 100 and the scheduling system 200 may include at least one computing device, for example, a server. Alternatively, the domain name system 100 and the scheduling system 200 may be devices implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field programmable gate array (field programmable gate array, FPGA), generic array logic (generic array logic, GAL), or any combination thereof.

Similarly, a configuration module 1002 and a domain name resolution module 1004 in the domain name system 100 and a configuration module 2002 and a domain name scheduling module 2004 in the scheduling system 200 may also be implemented by using software or implemented by using hardware. The configuration module 1002, the domain name resolution module 1004, the configuration module 2002, and the domain name scheduling module 2004 may be application programs, for example, VM services or container services, that are run on a computing device. In some examples, the configuration module 1002, the domain name resolution module 1004, the configuration module 2002, and the domain name scheduling module 2004 may be hardware, for example, servers.

In some possible implementations, the self-resolved domain name includes a domain name prefix and a fixed domain name suffix, the domain name prefix is generated through mapping based on a service address of the access network device, and the domain name suffix is a wildcard domain name.

The domain name system 100 is specifically configured to:
extract the domain name prefix from the self-resolved domain name of the target device;
   and
perform inverse mapping on the domain name prefix based on the manner of mapping between the self-resolved domain name and the service address, to obtain the service address of the target device.

In some possible implementations, the mapping manner includes at least one of number system conversion or character string conversion.

In some possible implementations, the scheduling system 200 is further configured to:
receive a registration request of the access network device, where the registration request includes the service address of the access network device; and
generate a self-resolved domain name of the access network device based on the manner of mapping between the self-resolved domain name and the service address and the service address of the access network device.

In some possible implementations, the domain name system 100 is further configured to:
receive a domain name resolution request of the scheduling system 200, where the domain name resolution request of the scheduling system 200 includes the self-resolved domain name of the access network device; and
return the service address of the access network device to the scheduling system 200.

The scheduling system 200 is further configured to:
detect a service state of the access network device based on the service address of the access network device.

In some possible implementations, the service state includes a domain name resolution service DNS state, and the scheduling system 200 is specifically configured to:
compare the service address that is of the access network device and that is returned by the domain name system 100 with a current service address of the access network device; and
when the service address that is of the access network device and that is returned by the domain name system 100 is consistent with the current service address of the access network device, determine that the DNS state of the access network device is normal; or when the service address that is of the access network device and that is returned by the domain name system is inconsistent with the current service address of the access network device, determine that the DNS state of the access network device is abnormal.

In some possible implementations, the service state includes a hypertext transfer protocol secure HTTPS service state, and the scheduling system is specifically configured to:
initiate an HTTPS service dialing test request to the access network device; and
when a dialing test response succeeds, determine that an HTTPS service of the access network device is normal; or when a dialing test response fails, determine that the HTTPS service of the access network device is abnormal.

In some possible implementations, the scheduling system 200 is further configured to:
receive a heartbeat packet of the access network device; and
check, based on the heartbeat packet, whether the service address of the access network device changes, and if the service address of the access network device changes, update the self-resolved domain name of the access network device based on the manner of mapping between the self-resolved domain name and the service address.

The domain name management system 10 is described above from a perspective of function modularization. The following describes the domain name management system 10 in this application from a perspective of hardware instantiation.

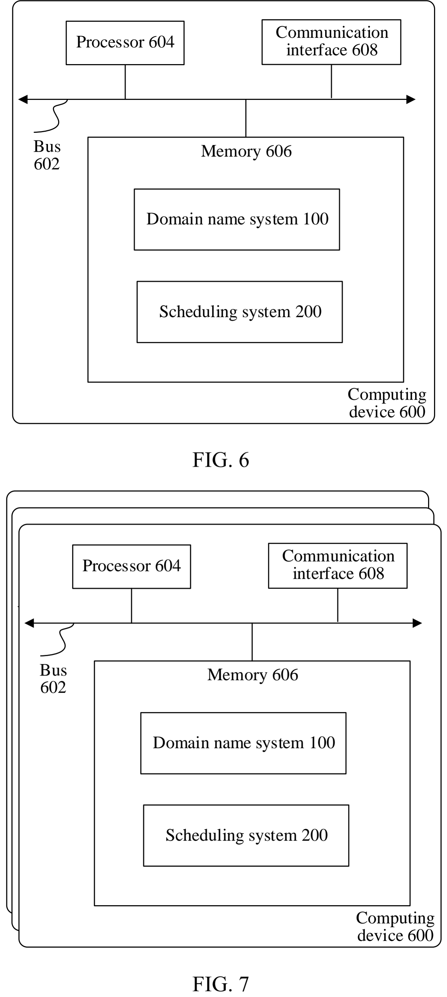

This application further provides a computing device 600. The computing device 600 is configured to implement a function of the domain name management system 10, or is configured to implement some functions of the domain name management system 10, for example, implement a function of the domain name system 100, or implement a function of the scheduling system 200. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that, a quantity of processors and a quantity of memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 6, but this does not mean that there is only one bus or only one type of bus. The bus 602 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program code. The processor 604 executes the executable program code to implement the foregoing domain name management method. Specifically, the memory 606 stores instructions used by a domain name management system 10 to perform the domain name management method. In some examples, the memory 606 may store some instructions used by the domain name management system 10 to perform the domain name management method, for example, store instructions for performing method steps of the domain name management method by the domain name system 100, or store instructions for performing method steps of the domain name management method by the scheduling system 200.

The communication interface 608 is a transceiver module, for example, but not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 7, the computing device cluster includes at least one computing device 600. A memory 606 in one or more computing devices 600 in the computing device cluster may store same instructions used by a domain name management system 10 to perform the domain name management method.

In some possible implementations, the one or more computing devices 600 in the computing device cluster may alternatively be configured to execute some instructions used by the domain name management system 10 to perform the domain name management method. In other words, the one or more computing devices 600 may be combined to jointly execute instructions used by the domain name management system 10 to perform the domain name management method.

It should be noted that memories 606 in different computing devices 600 in the computing device cluster may store different instructions to perform some functions of the domain name management system 10.

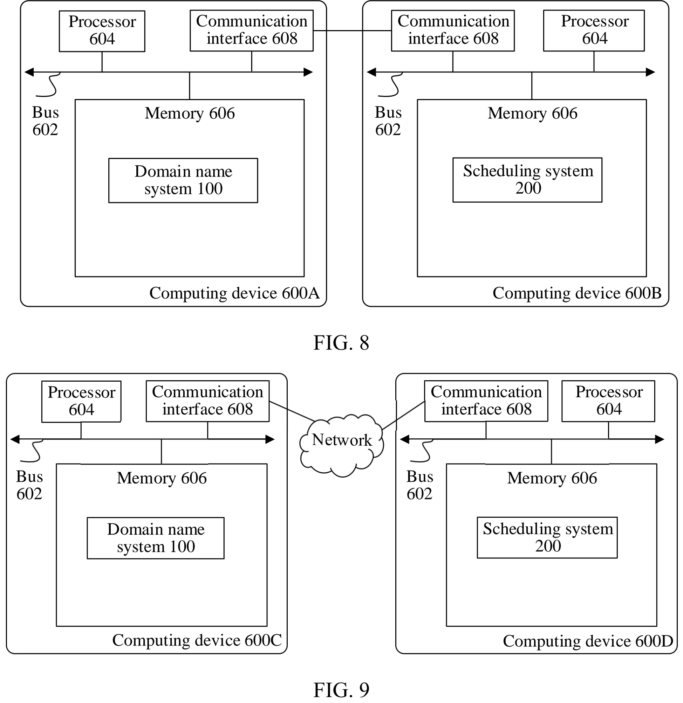

FIG. 8 shows a possible implementation. As shown in FIG. 8, two computing devices 600A and 600B are connected through the communication interface 608. A memory in the computing device 600A stores instructions used to performing the function of the domain name system 100. A memory in the computing device 600B stores instructions used to performing the function of the scheduling system 200. In other words, memories 606 in the computing devices 600A and 600B jointly store instructions used by the domain name management system 10 to perform the domain name management method.

For a connection manner between computing device clusters shown in FIG. 8, it may be considered that the domain name management method provided in this application requires computing power to maintain an access network device and schedule an access request to the access network device. Therefore, it is considered that functions implemented by the scheduling system 200 are performed by the computing device 600B.

It should be understood that, a function of the computing device 600A shown in FIG. 8 may alternatively be completed by a plurality of computing devices 600. Similarly, a function of the computing device 600B may alternatively be completed by a plurality of computing devices 600.

In some possible implementations, one or more computing devices in the computing device cluster may be connected via a network. The network may be a wide area network, a local area network, or the like. FIG. 9 shows a possible implementation. As shown in FIG. 9, two computing devices 600C and 600D are connected via a network. Specifically, each computing device is connected to the network through a communication interface in the computing device. In such a possible implementation, a memory 606 in the computing device 600C stores instructions for performing a function of the domain name system 100. In addition, a memory 606 in the computing device 600D stores instructions for performing a function of the scheduling system 200.

For a connection manner between computing device clusters shown in FIG. 9, it may be considered that the domain name management method provided in this application requires computing power to maintain an access network device and schedule an access request to the access network device. Therefore, it is considered that functions implemented by the scheduling system 200 are performed by the computing device 600D.

It should be understood that a function of the computing device 600C shown in FIG. 9 may alternatively be completed by a plurality of computing devices 600. Similarly, a function of the computing device 600D may alternatively be completed by a plurality of computing devices 600.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing domain name management method that is performed by the domain name management system 10.

An embodiment of this application further provides a computer program product including instructions. The computer program product may be software or a program product that includes the instructions, or that can run on a computing device or can be stored in any usable medium. When the computer program product runs on at least one computer device, the at least one computer device is enabled to perform the foregoing domain name management method.

Finally, it should be noted that the foregoing embodiments are merely intended to describe the technical solutions of the present invention rather but not intended to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof. Such modifications or replacements do not cause the essence of the corresponding technical solutions to depart from the protection scope of the technical solutions of embodiments of the present invention.

## Claims

1. A domain name management method, applied to a domain name management system, wherein the domain name management system comprises a domain name system and a scheduling system, and the method comprises:
receiving, by the scheduling system, an access request of a user, wherein the access request comprises a service domain name;
determining, by the scheduling system based on the access request, a target device from a plurality of access network devices that serve the service domain name, and redirecting the access request to the target device, wherein a service state of the target device is normal;
receiving, by the domain name system, a domain name resolution request of the user, wherein the domain name resolution request of the user is generated based on redirection information, and the domain name resolution request of the user comprises a self-resolved domain name of the target device;
determining, by the domain name system, a service address of the target device based on a manner of mapping between a self-resolved domain name and a service address and the self-resolved domain name of the target device; and
returning, by the domain name system, the service address of the target device, wherein the service address of the target device is used to access the target device.

2. The method according to claim 1, wherein the self-resolved domain name comprises a domain name prefix and a fixed domain name suffix, the domain name prefix is generated through mapping based on the service address of the access network device, and the domain name suffix is a wildcard domain name; and
determining, by the domain name system, the service address of the target device based on the manner of mapping between the self-resolved domain name and the service address and the self-resolved domain name of the target device comprises:
extracting, by the domain name system, the domain name prefix from the self-resolved domain name of the target device; and
performing, by the domain name system, inverse mapping on the domain name prefix based on the manner of mapping between the self-resolved domain name and the service address, to obtain the service address of the target device.

3. The method according to claim 1 or 2, wherein the mapping manner comprises at least one of number system conversion or character string conversion.

4. The method according to any one of claims 1 to 3, wherein before receiving, by the scheduling system, the access request of the user, the method further comprises:
receiving, by the scheduling system, a registration request of the access network device, wherein the registration request comprises the service address of the access network device; and
generating, by the scheduling system, a self-resolved domain name of the access network device based on the manner of mapping between the self-resolved domain name and the service address and the service address of the access network device.

5. The method according to claim 4, wherein the method further comprises:
receiving, by the domain name system, a domain name resolution request of the scheduling system, wherein the domain name resolution request of the scheduling system comprises the self-resolved domain name of the access network device;
returning, by the domain name system, the service address of the access network device to the scheduling system; and
detecting, by the scheduling system, a service state of the access network device based on the service address of the access network device.

6. The method according to claim 5, wherein the service state comprises a domain name resolution service DNS state, and detecting, by the scheduling system, the service state of the access network device based on the service address of the access network device comprises:
comparing, by the scheduling system, the service address that is of the access network device and that is returned by the domain name system with a current service address of the access network device; and
when the service address that is of the access network device and that is returned by the domain name system is consistent with the current service address of the access network device, determining, by the scheduling system, that the DNS state of the access network device is normal; or when the service address that is of the access network device and that is returned by the domain name system is inconsistent with the current service address of the access network device, determining, by the scheduling system, that the DNS state of the access network device is abnormal.

7. The method according to claim 5, wherein the service state comprises a hypertext transfer protocol secure HTTPS service state, and detecting, by the scheduling system, the service state of the access network device based on the service address of the access network device comprises:
initiating, by the scheduling system, an HTTPS service dialing test request to the access network device; and
when a dialing test response succeeds, determining, by the scheduling system, that an HTTPS service state of the access network device is normal; or when a dialing test response fails, determining, by the scheduling system, that an HTTPS service state of the access network device is abnormal.

8. The method according to any one of claims 1 to 7, wherein the method further comprises:
receiving, by the scheduling system, a heartbeat packet of the access network device; and
checking, by the scheduling system based on the heartbeat packet, whether the service address of the access network device changes, and if the service address of the access network device changes, updating the self-resolved domain name of the access network device based on the manner of mapping between the self-resolved domain name and the service address.

9. A domain name management system, wherein the domain name management system comprises:
a scheduling system, configured to: receive an access request of a user, wherein the access request comprises a service domain name; and determine, based on the access request, a target device from a plurality of access network devices that serve the service domain name, and redirect the access request to the target device, wherein a service state of the target device is normal; and
a domain name system, configured to receive a domain name resolution request of the user, wherein the domain name resolution request of the user is generated based on redirection information, and the domain name resolution request of the user comprises a self-resolved domain name of the target device, wherein
the domain name system is further configured to: determine a service address of the target device based on a manner of mapping between a self-resolved domain name and a service address and the self-resolved domain name of the target device; and return the service address of the target device, wherein the service address of the target device is used to access the target device.

10. The system according to claim 9, wherein the self-resolved domain name comprises a domain name prefix and a fixed domain name suffix, the domain name prefix is generated through mapping based on the service address of the access network device, and the domain name suffix is a wildcard domain name; and
the domain name system is specifically configured to:
extract the domain name prefix from the self-resolved domain name of the target device; and
perform inverse mapping on the domain name prefix based on the manner of mapping between the self-resolved domain name and the service address, to obtain the service address of the target device.

11. The system according to claim 9 or 10, wherein the mapping manner comprises at least one of number system conversion or character string conversion.

12. The system according to any one of claims 9 to 11, wherein the scheduling system is further configured to:
receive a registration request of the access network device, wherein the registration request comprises the service address of the access network device; and
generate a self-resolved domain name of the access network device based on the manner of mapping between the self-resolved domain name and the service address and the service address of the access network device.

13. The system according to claim 12, wherein the domain name system is further configured to:
receive a domain name resolution request of the scheduling system, wherein the domain name resolution request of the scheduling system comprises the self-resolved domain name of the access network device; and
return the service address of the access network device to the scheduling system; and
the scheduling system is further configured to:
detect a service state of the access network device based on the service address of the access network device.

14. The system according to claim 13, wherein the service state comprises a domain name resolution service DNS state, and the scheduling system is specifically configured to:
compare the service address that is of the access network device and that is returned by the domain name system with a current service address of the access network device; and
when the service address that is of the access network device and that is returned by the domain name system is consistent with the current service address of the access network device, determine that the DNS state of the access network device is normal; or when the service address that is of the access network device and that is returned by the domain name system is inconsistent with the current service address of the access network device, determine that the DNS state of the access network device is abnormal.

15. The system according to claim 13, wherein the service state comprises a hypertext transfer protocol secure HTTPS service state, and the scheduling system is specifically configured to:
initiate an HTTPS service dialing test request to the access network device; and
when a dialing test response succeeds, determine that an HTTPS service of the access network device is normal; or when a dialing test response fails, determine that an HTTPS service of the access network device is abnormal.

16. The system according to any one of claims 9 to 15, wherein the scheduling system is further configured to:
receive a heartbeat packet of the access network device; and
check, based on the heartbeat packet, whether the service address of the access network device changes, and if the service address of the access network device changes, update the self-resolved domain name of the access network device based on the manner of mapping between the self-resolved domain name and the service address.

17. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 8.

18. A computer-readable storage medium, comprising computer-readable instructions, wherein the computer-readable instructions are used to implement the method according to any one of claims 1 to 8.

19. A computer program product, comprising computer-readable instructions, wherein the computer-readable instructions are used to implement the method according to any one of claims 1 to 8.
